# EUROPÄISCHE PATENTSCHRIFT

(11) **EP 0 356 704 B1**
(45) Veröffentlichungstag und Bekanntmachung des Hinweises auf die Patenterteilung: **29.06.1994**
(21) Anmeldenummer: 89113666.5
(22) Anmeldetag: 25.07.1989
(51) Int. Cl.: G05B 19/04, B41F 33/00

(54) **Druckereisteuerungssystem**
Control system for a printing press
Système de commande d'imprimerie

(30) Priorität: 30.08.1988 DE 3829342
(43) Veröffentlichungstag der Anmeldung: 07.03.1990
(73) Patentinhaber: M.A.N.-ROLAND Druckmaschinen Aktiengesellschaft, 63012 Offenbach (DE)
(72) Erfinder: Zingher, Oded, D-8755 Alzenau (DE); Wührl, Arno, D-6052 Mühlheim/Main (DE); Suppes, Stephan, D-6050 Offenbach/Main (DE)
(74) Vertreter: Marek, Joachim, Dipl.-Ing.

(56) Entgegenhaltungen:
- EP-A- 0 096 238
- EP-A- 0 216 336
- DE-A- 3 630 876
- FR-A- 2 411 089
- GB-A- 2 022 870
- PATENT ABSTRACTS OF JAPAN vol. 10, no. 93 (P-445)(2150) 10 April 1986,& JP-A-60 229114 (MITSUBISHI DENKI KABUSHIKI KAISHA) 14 November 1985,

## Beschreibung

Die Erfindung betrifft ein Druckereisteuerungssystem nach dem Oberbegriff des Patentanspruchs 1.

Zur Bedienung von Funktionen innerhalb einer Druckerei sind bislang sehr viele verschiedene Systeme benötigt worden. In den Bereichen Verwaltung, Arbeitsvorbereitung, Betriebsdatenerfassung und Qualitätsregelung wurden ganz unterschiedliche Geräte und damit auch Bedienungseinheiten benutzt. Als großes Problem erweist sich dabei, daß vielerorts gleiche Daten benötigt werden, die aber, da die Systeme untereinander nicht verbunden sind, mit viel Aufwand neu erfaßt werden müssen. Damit entsteht ein großer Zeitbedarf für Tätigkeiten, die bereits anderorts durchgeführt wurden. Es ist daher das Ziel dieser Erfirdung solche Tätigkeiten zu verringern. Systeme dieser Art sind bereits bekannt geworden, sie schließen aber nicht alle innerhalb einer Druckerei vorkommenden Funktionen ein. Insbesondere sind Systeme zur Arbeitsvorbereitung in der Druckerei bekannt. Hier fehlt der Anschluß sowohl zur Betriebsdatenerfassung als auch zur Qualitätsregelung. Systeme zur Qualitätsregelung haben indes meist keine Beziehung zur Verwaltung innerhalb der Druckerei.

Aus der DE 3603876 A1 ist ein Produktionsprozeßsteuersystem für eine Zeitungsdruckvorrichtung bekannt. Es weist eine Anordnung von Rechnern in einem Netzwerk auf, wobei die Rechner unterschiedliche Aufgaben zur Steuerung von Teilsystemen bzw. Teilprozessen wie Papierlager, Versandraum, Druckplattentransport und Druckmaschinenbetrieb besitzen. Dabei ist ein Rechner vorhanden, der die Aufgabe der Überwachung und Steuerung der Teilprozeßrechner übernimmt und die Teilprozeßrechner wiederum in Teilprozessoren gegliedert sind. Nachteilig daran ist, daß durch die stark hierarchische Anordnung die Rechner an die jeweilige Aufgabe innerhalb der Druckerei gebunden und damit nicht flexibel sind. Außerdem fehlen Hinweise wie Hilfsaggregate z.B. Meßgeräte in die Steuerung der Druckmaschinen einbezogen werden sollen.
Aus der EP 0096238 A2 ist außerdem eine Mehrmaschinenbedienung zur Fernsteuerung von Druckmaschinen bekannt. Dabei sind an eine zentrale Farbdichtemeßanlage die Steuerpulte mehrerer Druckmaschinen angeschlossen. Die Verbindung besteht aber rechnergesteuert immer nur zu einem einzigen Steuerpult. Damit kann nicht von einem Rechner-Netzwerk gesprochen werden.

Es ist daher Aufgabe der Erfindung ein Druckereisteuerungssystem zu schaffen, in dem einheitliche Geräte zur Bedienungsvereinheitlichung an allen Arbeitsplätzen und zur Verwendbarkeit der Daten eines Arbeitsplatzes an allen anderen Arbeitsplätzen führt. Zu dem soll die Bedienung vereinfacht und von allen Plätzen aus sicherer gemacht werden.

Die Lösung dieser Aufgabe ergibt sich aus dem Kennzeichen des Anspruchs 1. Mit dem beschriebenen Druckereisteuerungssystem ist es möglich, die Daten aller anfallenden Arbeitsplätze untereinander auszutauschen. Somit können die Daten bei der Auftragserstellung zur Produktion benutzt, werden. Andererseits können die Produktionsdaten für die Betriebsdatenerfassung verwendet und bei der Kalkulation in der Verwaltung verwendet werden. Außerdem können die Daten aus der Betriebsdatenerfassung auch bei der Arbeitsvorbereitung zur Kalkulation der Betriebsmittel verwendet werden. Durch die Definition der Belegungen der einzelnen Stationsrechner wird die Bedienung viel sicherer, da von einem fremden Arbeitsplatz aus nicht unbefugt in fremde Datenbestände eingegriffen werden kann. Das äußert sich darin, daß beispielsweise nicht von der Verwaltung aus Peripherieeinheiten der Arbeitsvorbereitung bedient werden können. Einzelheiten sind aus der Beschreibung und den zugehörigen Zeichnungen zu entnehmen.

Im Einzelnen zeigen:
- Fig. 1: ein Schema eines Druckereisteuerungssystems,
- Fig. 2: das Systemteil zur Identifikation der Anschlußbelegung und
- Fig. 3: eine spezielle Eingabeeinheit.

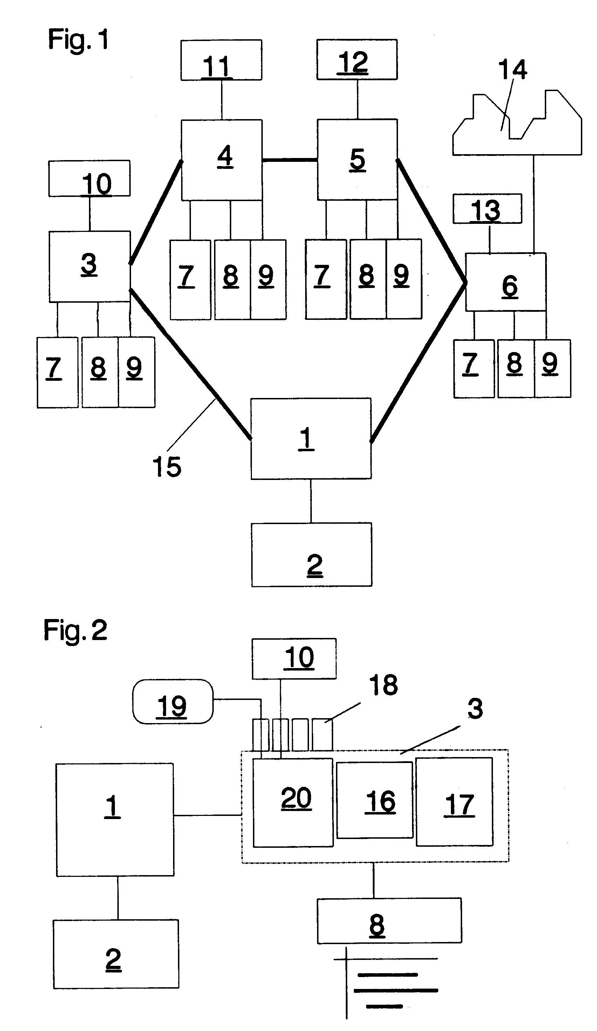

In Fig. 1 ist die Verbindung der verschiendenen Rechner des Druckereisteuerungssystemes untereinander dargestellt. Der Leitreichner 1 ist mit einem ersten Datenspeicher 2 verbunden. Der Datenspeicher 2 kann ein größeres Plattenlaufwerk oder auch ein Bandlaufwerk sein. Auf dem Datenspeicher 2 sind alle für den Betrieb des Druckereisteuerungssystems notwendigen Daten vorhanden. Näheres zu diesen Daten erfolgt weiter unten. Außerdem gehören zum Druckereisteuerungssystem Stationsrechner 3, 4, 5, 6. Als Stationsrechner wird bezeichnet etwa ein Personal Computer der für eine bestimmte Aufgabe in einem Arbeitsbereich verwendet wird.

Die Stationsrechner könnten im Einzelnen wie folgt zugeordent sein:
Stationsrechner 3 für Verwaltung,
Stationsrechner 4 für Arbeitsvorbereitung,
Stationsrechner 5 für Betriebsdatenerfassung und
Stationsrechner 6 für Qualitätskontrolle.

Damit sind an jedem Arbeitsplatz die durchzuführenden Arbeitsgänge sauber getrennt. Zu jedem dieser Stationsrechner gehört eine Reihe von Speichern. Jeder Stationsrechner besitzt einen Datenspeicher 7, einen Definitionsspeicher 8 und einen Befehlswegspeicher 9. Alle drei Speicher werden direkt vom Rechner aus bedient. Arbeiten aber mit unterschiedlichen externen Medien zusammen. An die Stationsrechner 3, 4, 5, 6 sind schließlich Peripherieeinheiten 10, 11, 12, 13 anschließbar. Der Anschluß ist frei möglich da die Anschlußbuchsen für alle Stationsrechner gleich vorhanden sind. Als Peripherieeinheit für den Stationsrechner 3 der Verwaltung käme etwa ein Anschluß an einen Großrechner in Frage, in dem spezielle Daten zur Druckindustrie abrufbar sind. Als Peripherieeinheit für den Stationsrechner 4 in der Arbeitsvorbereitung käme beispielsweise ein sogenannter Plattenscanner 11 in Frage, mit dem Voreinstelldaten für die Vorbereitung eines Druckauftrages von einer Druckplatte gewonnen werden können. Für den Stationsrechner 5 die Betriebsdatenerfassung kommen Meßeinrichtungen 12 an der Maschine in Frage, mit denen Betriebsmittelverbräuche, Laufzeit der Maschine, Ausfallzeiten und Störfallursachen erfaßt werden können. Schließlich kommt für den Stationsrechner 6 die Qualitätsregelung eine Farbdichtemeßanlage 13 als Peripherieeinheit in Frage. Diese würde benötigt um eine Farbregelung an der vorhandenen Druckmaschine durchzuführen, wobei in diesem Fall die Druckmaschine ebenfalls an diesem Stationsrechner 6 angeschlossen wäre, da er bei einer Farbregelung bzw. bei einer Farbfernsteuerung die Datenübermittlung an die Druckmaschine 14 übernehmen müßte. Alle Rechner sind untereinander mit einer Datensammelleitung 15 verbunden. Mit Hilfe dieser Datensammelleitung können die einmal gewonnenen Daten im Datenspeicher 2 des Leitrechners 1 abgelegt werden und sind dann von allen anderen Rechnern aus auch nutzbar. So können vom Stationsrechner 3 aus Daten bezüglich Arbeitszeit und Arbeitskosten eingegeben werden. Vom Stationsrechner 4 aus werden spezielle druckauftragbezogene und die Maschineneinstellung betreffende Daten eingegeben. Vom Stationsrechner 5 aus werden die Verbräuche an Betriebsmitteln gemeldet und schließlich werden vom Stationsrechner 6 aus die Enddaten eines Druckauftrages inclusive der Qualitätsdaten gemeldet. Damit brauchen Daten die an den verschiedenen Orten erfaßt wurden nicht in andere Medien übertragen zu werden, sondern sie können nachdem sie in einheitlichen Speichermedien abgelegt sind von überall in gleicher Weise benutzt werden. Dadurch erleichtert sich die Arbeit für das Bedienungspersonal ganz erheblich, was zu höherer Effektivität und auch exakterer Ausführung der Arbeit führt. Der Datenaustausch zwischen dem Datenspeicher 2 des Leitrechners 1 und den einzelnen Speichern der Stationsrechner geschieht über heute hinlänglich bekannte Rechnernetze, entweder in Ringform oder in Sternform. Dies braucht daher nicht näher beschrieben zu werden.

In Fig. 2 ist dargestellt, wie die Daten zur Definition eines einzelnen Arbeitsplatzes an die Stationsrechner übermittelt, dort verwertet werden und wie sie sich insgesamt auswirken. Zum Stationsrechner 3 der hier beispielhaft herausgezogen wird, gehören bestimmte Peripherieeinheiten. Es ist daher notwendig dem Rechner für die spätere Arbeit so einzustellen, daß er entsprechende Peripherieeinheiten erkennt und auch zur Benutzung aktiviert. Dazu wird beim Starten des gesamten Systems eine Speichertabelle aus dem Datenspeicher 2 in den Definitionsspeicher 8 des Stationsrechners 3 übermittelt. In dem Definitionsspeicher 8 stehen nun Kenndaten für alle im System vorkommenden Peripherieeinheiten. Im Stationsrechner 3 ist ein Vergleicher 16 vorhanden, der die Signale einer Abfrageeinheit 17, die wiederum die Belegung der Anschlußbuchsen 18 überprüft mit dem Speicherinhalt des Definitionsspeicher 8 vergleicht, dabei stehen 2 Fälle zur Entscheidung an:

Zum einen kann eine Peripherieeinheit vorhanden sein oder nicht? Zum anderen kann eine falsche Peripherieeinheit vorhanden sein?

Für den ersten Fall wird bei Vorhandensein einer auch für diesen Arbeitsplatz definierten Peripherieeinheit eine Anzeigeeinrichtung 19 aktiviert, die dann die entsprechende Peripherieeinheit als angeschlossen meldet. Nach neuerem Stand ist das etwa auf Datenbildschirmen durch hervorgehobenen Einfärbung einstellbar. Andererseits könnte auch durch Beleuchtung mit einer Leuchtdiode die der Anschluß dieser Peripherieenheit markiert werden. Ist die entsprechende Peripherieeinheit nicht vorhanden leuchtet entweder die Leuchtdiode nicht oder die Darstellung auf dem Bildschirm ist abgeschattet. Wird auf der anderen Seite eine Peripherieeinheit angeschlossen, die für den bestimmten Arbeitsplatz nicht definiert wurde, dann wird für den Anschluß auch keine Belegung gemeldet, damit kann auch die angeschlossene Peripherieeinheit nicht bedient werden. Da erst durch den richtig gemeldeten Anschluß im Vergleicher 16 ein Aktivierungsspeicher 20 besetzt wird, der den Anschluß zur Peripherieeinheit frei gibt, kann diese auch erst dann vom Stationsrechner aus angesprochen werden. Im Definitionsspeicher 8 sind für den Fall des Stationsrechners 3 also die Daten aller Peripherieeinheiten vorhanden, wobei aber die Peripherieeinheiten gesondert markiert sind, die für diesen Arbeitsplatz vorgesehen wurden. Ein Übergriff bzw. die Bedienung von nicht vorgesehenen Peripherieeinheiten ist also nicht möglich.

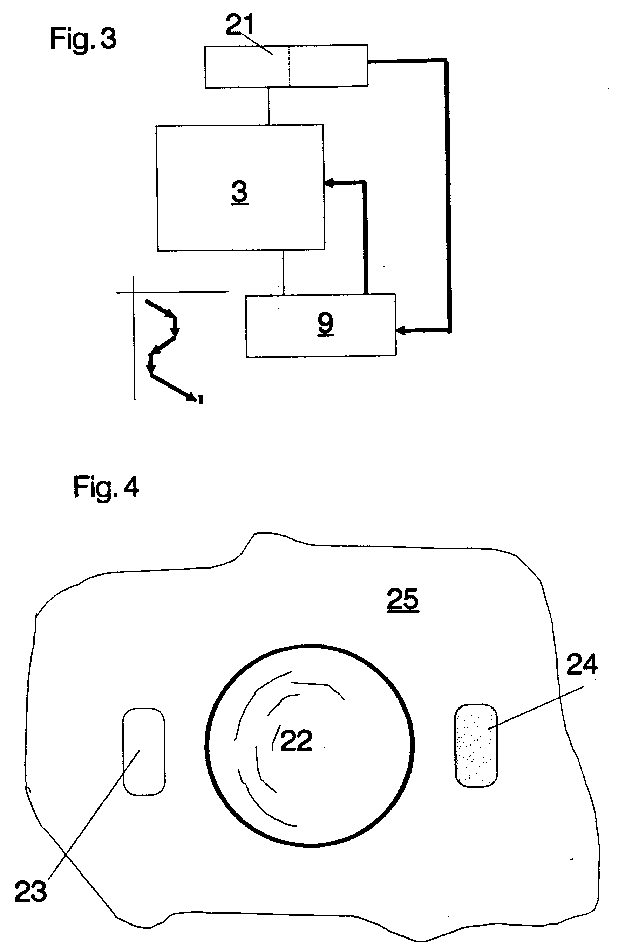

In Fig. 3 ist schließlich eine spezielle Art der Bedienung mit erleichterter Ansteuerung der Befehle aufgezeigt. Mit dem beispielhaft aufgeführten Stationsrechner 3 ist eine Cursorsteuerung 21 verbunden. Am Stationsrechner 3 ist auch ein Befehlswegspeicher 9 vorgesehen. Im Befehlswegspeicher 9 werden die Daten zu Befehlsabläufe abgespeichert, wie sie das Bedienungspersonal zuletzt ausgewählt hatte. Dabei wird in einer Liste die jeweilige Auswahl an einer Entscheidungsstelle aufgeführt. Mit der Cursorsteuerung 21 besteht nun die Möglichkeit, durch Auswahl von bestimmten Eingabemöglichkeiten ein Befehlsablauf zu erzeugen. Dazu sind Bedienungshandlungen an der Cursorsteuerung und Auslösehandlungen an einer Datenfreigabetaste notwendig. Ist für ein bestimmten Befehlsablauf einmal eine Vorauswahl getroffen worden, so werden die einzelnen Stationen im Befehlswegspeicher 9 festgehalten. Mit einer weiteren Taste an der Cursorsteuereinrichtung, die hier Aktionstaste genannt wird, ist es möglich den vorgegebenen Weg direkt zu verfolgen, so daß sich eine Art "grüne Welle" ergibt. Mit dieser Art der Bedienung werden erhebliche Bedienungs- und Zeitersparnisse erreicht.

Die Cursorsteuerung 21 ist dazu zweifach mit dem Stationsrechner 3 verbunden. Zum einen über den normalen Weg eine Tastaturverbindung und zum anderen über einen direkten Weg unter Zuhilfenahme des Befehlswegspeichers 9.

In Fig. 4 ist eine solche spezielle Cursorsteuerung gezeigt. Sie kann aus einem sogenannten Rollerball 22 der als Cursorsteuerinstrument in das Steuerpult 25 eingelassen ist, bestehen. Dem Rollerball 22 wird eine Datenfreigabetaste 23 und eine Aktionstaste 24 beiderseits zugeordnet. Damit ist eine äußerst einfache Bedienung möglich. Durch farbliche Unterscheidung z.B. durch grüne Einfärbung der Aktionstaste wird die Möglichkeit gegeben die Bedienung weiterhin abzusichern und zu vereinfachen.

Durch die Verbindung der Rechner untereinander wird eine vielfältige Möglichkeit zur Nutzung von Daten geschaffen. Dabei wird aber auch die Sicherheit der Bedienung erheblich erhöht. In dem Benutzungsmöglichkeiten auf anderen Arbeitsplätzen eingeschränkt werden. Weiterhin wird der einzelne Arbeitsplatz sozusagen automatisch für die ihm zugewiesenen Fähigkeiten ausgerüstet, wenn der Rechner bzw. das Druckereisteuerungssystem neu gestartet wird. Schließlich wird die Bedienung durch eine spezielle Cursorsteuerung soweit vereinfacht, daß für Routineabläufe lediglich noch Tastendrücke mit Hilfe der Aktionstaste 24 notwendig sind. Zum einen ist damit der Arbeitsbereich für den einzelnen Arbeitsplatz erheblich erweitert worden, da der Datenzugriff auf eine viel größere Basis gestellt wurde. Zum anderen ist die Sicherheit für die Daten des einzelnen Arbeitsplatzes erheblich erhöht worden, weil Zugriffe in spezielle Bereiche eines Arbeitsplatzes abgeschottet werden. Die Druckereisteuerung kommt so in ein Gesamtsystem aus gleichen Bausteinen.

Die im Einzelnen geschilderten speziellen Ausführungsformen wie z.B. der angedeutete Verbund der Rechner in Ringform oder die Cursorsteuerung als Rollerball sind selbstverständlich auch auf andere Ausführungsformen übertragbar. Als Cursorsteuerung könnte z.B. eine Eingabetastatur oder eine Maus verwendet werden. Die Befehlseingabe wäre andererseits auch über einen sogenannten Berührungsbildschirm möglich.

### Bezugszeichenliste

- 1: Leitrechner
- 2: erster Datenspeicher
- 3: Stationsrechner
- 4: Stationsrechner
- 5: Stationsrechner
- 6: Stationsrechner
- 7: Datenspeicher
- 8: Definitionsspeicher
- 9: Befehlswegspeicher
- 10: Großrechneranschluß
- 11: Plattenscanner
- 12: Meßgeräte
- 13: Farbdichtemessanlage
- 14: Druckmaschine
- 15: Datensammelleitung
- 16: Vergleicher
- 17: Abfrageeinheit
- 18: Anschlußbuchse
- 19: Anzeigeeinrichtung
- 20: Aktivierungsspeicher
- 21: Cursorsteuerung
- 22: Rollerball
- 23: Datenfreigabetaste
- 24: Aktionstaste
- 25: Steuerpult

## Patentansprüche

1. Druckereisteuerungssystem mit einem Leitrechner (1) und einem diesem zugeordneten Datenspeicher (2), mehreren Stationsrechnern (3 - 6) und diesen jeweils zugeordneten Datenspeichern (7), wobei der Leitrechner (1) und die Stationsrechner (3 - 6) über eine Datensammelleitung (15) sowohl untereinander und wenigstens über einen der Stationsrechner (3 - 6) mit einer oder mehreren Druckmaschinen (14) verbunden sind,
**dadurch gekennzeichnet**,
daß jedem Stationsrechner (3 - 6) ein Definitionsspeicher (8) zur Aufnahme von Kenndaten für anzuschließende Peripherieeinheiten oder der Druckmaschine (14) zugeordnet ist, wobei die Kenndaten über die Datensammelleitung (15) aus dem Datenspeicher (2) des Leitrechners (1) jeweils spezifisch auf die Stationsrechner (3 - 6) übertragbar sind,
daß jedem Stationsrechner (3 - 6) ein Befehlswegspeicher (9) zur Speicherung der Daten von Befehlsabläufen, die im jeweiligen Stationsrechner (3 - 6) bei der Bedienung von Peripherieeinheiten oder der Druckmaschine (14) entstehen, zugeordnet ist,
daß der Leitrechner (1) und die Stationsrechner (3 - 6) einen untereinander gleichen Satz Anschlußbuchsen (18) zum wahlweisen Anschluß von Peripherieeinheiten und/oder Druckmaschinen (14) aufweisen,
und daß als Peripherieeinheiten Eingabeeinrichtungen und/oder Datenspeichereinheiten und/oder ein Plattenscanner (11) und/oder ein Großrechneranschluß (10) und/oder Meßgeräte (12) und/oder eine Farbdichtemeßanlage (13) und/oder Betriebsdatenerfassungseinrichtungen vorgesehen sind, wobei die von den Peripherieeinheiten gewonnenen Daten sowohl in einem Datenspeicher (7) eines der Stationsrechner (3 - 6) als auch über die Datensammelleitung (15) in dem Datenspeicher (2) des Leitrechners (1) speicherbar sind.

2. Druckereisteuerungssystem nach Anspruch 1,
**dadurch gekennzeichnet**,
daß als mit den Befehlswegspeichern (9) zusammenarbeitende Peripherieeinheiten insbesondere Cursorsteuerungen (21) mit einer Datenfreigabe (23) und einer Aktionstaste (24) vorgesehen sind.

3. Druckereisteuerungssystem nach Anspruch 1 und 2,
**dadurch gekennzeichnet**,
daß die Aktionstaste (24) derart mit dem Stationsrechner (z.B. 3) derart verbunden ist, daß der im Befehlswegspeicher (9) abgespeicherte Bedienungsweg direkt auslösbar ist, ohne weitere Bedienung von Steuer- und Eingabetasten.

4. Druckereisteuerungssystem nach Anspruch 1, 2 und 3,
**dadurch gekennzeichnet**,
daß als Cursorsteuerung (21) ein Rollerball (22) vorgesehen ist.

5. Druckereisteuerungssystem nach Anspruch 1,
**dadurch gekennzeichnet**,
daß ein Definitionsspeicher (8) mit einem Vergleicher (16) und dieser über eine Abfrageeinheit (17) mit den Anschlußbuchsen (18) eines Stationsrechners (z.B. 3) verbunden ist, wobei der Vergleicher (16) zur Ausgabe der Auswertung mit einer Anzeigeeinrichtung (19) für die ausgeschlossenen Peripherieeinheiten (10-13) und mit einem Aktivierungsspeicher (20) verbunden ist.

## Claims

1. Print works control system with a main computer (1) and a data store (2) connected to this, several station computers (3 - 6) and respective data stores (7), wherein the main computer (1) and the station computers (3 - 6) are connected both one with another and at least via one of the station computers (3 - 6) with one or more printing presses (14), characterised in that, arranged relative to each station computer (3 - 6) is a definition store (8) for receiving characteristic data for peripheral units to be connected or relative to the printing press (14), wherein the characteristic data can be transferred via the data bus (15) from the data store (2) of the main computer (1) in each case specifically to the station computers (3 - 6),
that arranged relative to each station computer (3 - 6) is a command path store (9) for storing the data of command sequences which arise in the respective station computers (3 - 6) on the operation of peripheral units or of the printing press (14),
that the main computer (1) and the station computer (3 - 6) have a mutually identical set of connection ports (18) for the connection according to choice of peripheral units and/or printing presses (14),
and that as peripheral units there are provided input units and/or data storage units and/or a plate scanner (11) and/or a mainframe connection (10) and/or measuring devices (12) and/or an ink density measuring unit (13) and/or operational data capture devices, wherein the data secured from the peripheral units can be stored both in a data store (7) of one of the station computers (3 - 6) as well as also via the data bus (15) in the data store (2) of the main computer (1).

2. Print works control system according to Claim 1, characterised in that as peripheral units cooperating with the command path stores (9), there are provided in particular cursor controls (21) with a data release (23) and an action button (24).

3. Print works control system according to Claim 1 and 2, characterised in that the action button (24) is connected with the station computer (e.g. 3) in such a way that the operational path stored in the command path store (9) is directly releasable without further operation of control and input buttons.

4. Print works control system according to Claim 1, 2 and 3, characterised in that a roller ball (22) is used as cursor control (21).

5. Print works control system according to Claim 1, characterised in that a definition store (8) with a comparator (16) and this via an interrogation unit (17) is connected with the connection ports (18) of a station computer (e.g. 3), wherein the comparator (16) is, for production of the evaluation, connected with an indicator device (19) for the impossible peripheral units (10-13) and with an activation store (20).

## Revendications

1. Système de commande d'imprimerie comportant un calculateur pilote (1) et une mémoire de données (2) associée à celui-ci, ainsi que plusieurs calculateurs de poste (3-6) et des mémoires de données (7) associées à chaque fois à ceux-ci, le calculateur pilote (1) et les calculateurs de poste (3-6) étant reliés ensemble par l'intermédiaire d'une liaison de collecte de données (15) et au moins par l'intermédiaire de l'un des calculateurs de poste (3-6) à une ou plusieurs machines d'impression (14), caractérisé,
- en ce qu'à chaque calculateur de poste (3-6) est associée une mémoire de définition (8) pour recevoir des données caractéristiques pour des unités périphériques raccordées ou de la machine d'impression (14), les données caractéristiques pouvant être transmises à chaque fois de façon spécifique de la mémoire de données (2) du calculateur pilote (1) aux calculateurs de poste (3-6), par l'intermédiaire de la liaison de collecte de données (15),
- en ce qu'à chaque calculateur de poste (3-6) est associée une mémoire d'ordres (9) pour stocker les données d'exécution d'ordres qui sont engendrées dans le calculateur de poste correspondant (3-6) lors de l'utilisation d'unités périphériques ou de la machine d'impression (14),
- en ce que le calculateur pilote (1) et les calculateurs de poste (3-6) comportent un groupe de douilles de raccord (18), respectivement identique, pour le raccord quelconque d'unités périphériques et/ou de machines d'impression (14),
- et en ce que, comme unités périphériques, on prévoit des dispositifs e'entrée et/ou des unités de stockage de données et/ou un scanner à plaque (11) et/ou un raccord pour calculateur de gestion (10) et/ou des appareils de mesure (12) et/ou une installation de mesure du noircissement (13) et/ou des dispositifs d'acquisition de données de fonctionnement, les données obtenues des unités périphériques pouvant être stockées, aussi bien dans une mémoire de données (7) de l'un des calculateurs de poste (3-6), que dans la mémoire de données (2) du calculateur pilote (1) par l'intermédiaire de la liaison de données (15).

2. Système de commande d'imprimerie selon la revendication 1,
caractérisé en ce que l'on prévoit, comme unités périphériques coopérant avec les mémoires d'ordres (9), en particulier des commandes de curseur (21) comportant un lancement de données (23) et une touche d'actionnement (24).

3. Système de commande d'imprimerie selon les revendications 1 et 2,
caractérisé en ce que la touche d'actionnement (24) est reliée au calculateur de poste (par exemple 3) de sorte que le processus de service stocké dans la mémoire d'ordres (9) peut être déclenché directement, sans l'utilisation supplémentaire de touches de commande ou d'entrée.

4. Système de commande d'imprimerie selon les revendications 1, 2 et 3,
caractérisé en ce que l'on prévoit une boule de commande (22) comme commande de curseur (21).

5. Système de commande d'imprimerie selon la revendication 1,
caractérisé en ce qu'une mémoire de définition (8) est reliée à un comparateur (16) et celui-ci est relié, par l'intermédiaire d'une unité d'interrogation (17), aux douilles de raccord (18) d'un calculateur de poste (par exemple 3), le comparateur (16) étant relié pour la sortie de l'analyse à un dispositif d'affichage (19) pour les unités périphériques externes (10-13) et à une mémoire d'activation (20).
